# EUROPÄISCHE PATENTSCHRIFT

(11) **EP 2 209 604 B1**
(45) Veröffentlichungstag und Bekanntmachung des Hinweises auf die Patenterteilung: **12.02.2014**
(21) Anmeldenummer: 08851562.2
(22) Anmeldetag: 14.11.2008
(51) Int. Cl.: B29C 47/76

(54) **VERFAHREN ZUM EXTRUDIEREN VON KUNSTSTOFFTEILEN**
METHOD FOR EXTRUDING PLASTIC PARTS
PROCÉDÉ D'EXTRUSION DE PIÈCES EN MATIÈRE PLASTIQUE

(30) Priorität: 23.11.2007 DE 102007056610
(43) Veröffentlichungstag der Anmeldung: 28.07.2010
(73) Patentinhaber: Baratti Engineering GmbH, 79664 Wehr (DE)
(72) Erfinder: BARATTI, Gerhard, CH-3914 Belalp (CH)
(74) Vertreter: Goy, Wolfgang
(86) Internationale Anmeldenummer: PCT/DE2008/001891
(87) Internationale Veröffentlichungsnummer: WO 2009/065384

(56) Entgegenhaltungen:
- WO-A1-2006/100429
- DE-A1- 3 407 104
- DE-A1- 4 424 779
- DE-C1- 19 630 383
- JP-A- 2003 160 363
- JP-A- 2004 189 904
- US-A- 3 619 145
- US-A- 6 080 240

## Beschreibung

Die Erfindung betrifft ein Verfahren zum Extrudieren von Kunststoffteilen nach dem Oberbegriff des Anspruchs 1, vgl. JP 2003 160 363.

Bei der Extrusion werden Kunststoffe (oder andere zähflüssige härtbare Materialien) in einem kontinuierlichen Verfahren durch eine Düse gepreßt. Dazu wird das kontinuierlich aufgegebene Kunststoffgranulat - das Extrudat - zunächst durch einen Extruder (auch Schnekkenpresse genannt) mittels Heizung und innerer Reibung aufgeschmolzen und homogenisiert. Weiterhin wird im Extruder der für das Durchfließen durch die Schlitzdüse notwendige Druck aufgebaut. Nach dem Austreten aus der Düse erstarrt der Kunststoff meist in einer wassergekühlten Kalibrierung.

In verschiedenen Extrusionsprozessen wird am Extruder an der Extrusionsschnecke unmittelbar vor der Austrittsdüse eine oder mehrere Öffnungen zum Anschluß an ein Vakuumsystem konzipiert. Das Vakuum wird benötigt, um zum Entgasen eventuelle Lufteinschlüsse dem viskosen Kunststoff zu entziehen, um zum Trocknen eventuelle Feuchte zu entziehen oder um auch unerwünschte Additive bei hoher Temperatur und hohem Vakuum gasförmig dem Kunststoff zu entziehen.

Das Problem besteht darin, daß die entzogenen Gase oder sonstige Teile in die Einrichtung zum Erzeugen des Vakuums gelangen. Dadurch entstehen Ablagerungen von sublimierbaren oder kondensierbaren Gasen in der eigentlichen Vakuumpumpe kann dies langfristig zu Störungen führen. Bekannte Abscheidungssysteme für die Ablagerungen haben jedoch den Nachteil, daß der Prozeß unterbrochen werden muß, um die entsprechenden Abscheidungssysteme zu reinigen. Dadurch entsteht ein enormer Produktionsausfall mit dadurch bedingten Produktionsausfallkosten.

Davon ausgehend liegt der Erfindung die **Aufgabe** zugrunde, bei einem Verfahren zum Extrudieren von Kunststoffteilen die Entsorgung der sublimationsfähigen und gegebenenfalls nicht sublimationsfähigen und/oder kondensierbaren Gasen zu verbessern sowie weiterhin die Betriebssicherheit des Vakuumerzeugungssystems bei kontinuierlichem Betrieb ohne Betriebsstillstand zu verbessern.

Die technische **Lösung** ist gekennzeichnet durch die Merkmale im kennzeichnenden Teil des Anspruchs 1.

Die Grundidee des erfindungsgemäßen Verfahrens zum Extrudieren von Kunststoffteilen besteht darin, daß die entzogenen sublimationsfähigen Gase durch Kühlung sublimiert werden, bevor sie die Einrichtung zur Erzeugung des Vakuums erreichen. Denn durch die Kühlung der sublimationsfähigen Gase unterhalb der Sublimationstemperatur gehen diese Gase direkt in die feste Form in Form von Pulver über. Somit werden aufgrund der Absenkung der Gastemperatur auf beispielsweise weniger als 10° Celsius alle sublimierbaren Anteile abgeschieden bzw. in Pulverform ohne Verklebung gebracht. Somit saugt die Vakuumpumpe absolut sauberes Gas an, wobei eine betriebssichere Arbeitsweise im Dauerbetrieb gewährleistet ist. Dadurch kann das eigentliche Vakuumerzeugungssystem betriebssicher konzipiert werden, da die störenden Festteile in den Gasen vor der Vakuumpumpe abgeschieden werden. Dadurch wird der Gasstrom, der durch die Vakuumpumpe gesaugt wird, sauber und trocken. Dies verhindert somit das Entstehen von Ablagerungen von sublimierbaren und gegebenenfalls kondensierbaren Gasen in der eigentlichen Vakuumpumpe. Ein weiterer wesentlicher Vorteil des erfindungsgemäßen Verfahrens besteht darin, daß die Reinigung sowohl des Vakuumfilters als auch des Sublimators kontinuierlich während des Prozesses erfolgen kann und auch die Ausschleusung der abgeschiedenen Produkte während des Prozesses erfolgen kann, so daß kein Maschinenstillstand sowie Produktionsstillstand entsteht.

Erfindungsgemäß werden in einer zweiten Stufe Bestandteile, welche nicht im Sublimator abgeschieden worden sind, ausgefiltert. Bei dem Filter kann es sich um einen Minitaschenfilter handeln. Dies hat den Vorteil, daß der Gaststrom, der durch die Vakuumpumpe gesaugt wird, bestmöglich sauber und trocken ist. Indem somit die Vakuumpumpe absolut sauberes Gas ansaugt, ist dadurch eine betriebssichere Arbeitsweise im Dauerbetrieb gewährleistet.

Die Weiterbildung gemäß Anspruch 2 schlägt eine konstruktive Verfahrensdurchführung vor. Die Grundidee besteht darin, daß eine gekühlte Platte vorgesehen ist, welche zum einen das entzogene Gas kühlt und auf welcher zum anderen das Sublimat abgeschieden wird. Durch diese Ablagerung des Sublimats auf der Platte kann auf einfache Weise das Sublimat von Zeit zu Zeit von der Platte entfernt und mit einer automatischen Produktausschleusung unter Vakuum abgeführt werden. Dadurch ist ein kontinuierlicher Extrusionsprozeß mit bedarfsweiser Reinigung des Sublimators gewährleistet. Somit kann insgesamt ein kontinuierlicher Absaugprozeß ohne Reinigungsunterbruch aufrechterhalten werden, ohne daß für die Abreinigung weitere Betriebsmittel eingesetzt werden müssen, was später wieder vom Prozeßgut getrennt und entsorgt werden müßte. Das abgeschiedene Sublimat wird somit unter kontinuierlicher Aufrechterhaltung des Absaugprozesses ohne Reinigungsunterbruch von Zeit zu Zeit von der Platte entfernt und abgeführt.

Vorzugsweise wird gemäß Anspruch 3 das Sublimat mittels Druckluft weggeblasen und der Ausschleusung unter Vakuum zugeführt. Die Abreinigung der Platte mit Hilfe von Luft hat zur Folge, daß kein weiteres Reinigungsmittel mit dem Sublimat oder Kondensat in Verbindung kommt und dadurch auch später nicht wieder zusätzlich getrennt bzw. entsorgt werden muß.

Alternativ ist es auch gemäß Anspruch 4 möglich, das Sublimat von der Platte mechanisch zu entfernen. Dazu kann eine Art Schaber dienen.

Die Weiterbildung gemäß Anspruch 5 schlägt vor, daß die Vakuumleitung zwischen dem Extruder und dem Sublimator beispielsweise auf ca. 300° C beheizt wird, um eine Sublimation und gegebenenfalls Kondensation in der Vakuumleitung zu verhindern.

Gemäß der Weiterbildung in Anspruch 6 werden die ausgefilterten Bestandteile von Zeit zu Zeit aus dem Filter entfernt. Dies kann durch eine entsprechende automatische Ausschleusung unter Vakuum erfolgen, so daß ein kontinuierlicher Extrusionsprozeß ohne Unterbruch für die Reinigung des Filters gewährleistet ist.

Vorzugsweise werden gemäß Anspruch 7 die ausgefilterten Bestandteile aus dem Filter mittels Druckluft ausgeblasen.

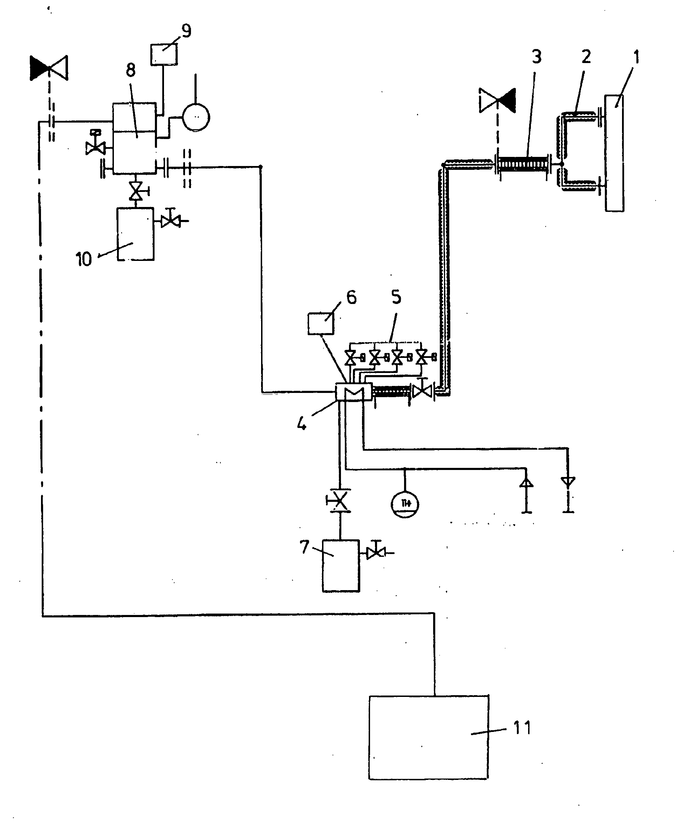

Ein Ausführungsbeispiel des erfindungsgemäßen Verfahrens zum Extrudieren von Kunststoffteilen wird nachfolgend anhand der Zeichnung beschrieben. Diese zeigt eine schematische Anlage für das Extrusionsverfahren.

In einem Extruder 1 werden Kunststoffteile hergestellt. Zu diesem Zweck wird heißer, viskoser Kunststoff in entsprechende Formenhohlräume geleitet, welche in einem Spritzgießwerkzeug ausgebildet sind. Nach dem Extrudieren der Kunststoffteile werden diese gekühlt und können dann entnommen werden.

Im Bereich der Zuführung des heißen, viskosen Kunststoffs unmittelbar vor der Austrittsdüse ist ein Vakuumanschluß 2 angeschlossen und über eine Vakuumleitung 3 mit einem Sublimator 4 verbunden. Dieser Sublimator 4 weist eine gekühlte, horizontale Platte auf. Weiterhin ist ein Druckluftanschluß 5 einer Druckluftabreinigung vorgesehen. Alternativ kann auch eine Art Schaber vorgesehen sein. Schließlich ist für die automatische Produktausschleusung eine Vakuumeinrichtung 7 vorgesehen.

Dem Sublimator 4 nachgestaltet ist ein Filter 8 in Form eines Feinvakuumminitaschenfilters. Auch dieser weist eine Druckluftabreinigung 9 sowie für die automatische Produktausschleusung eine Vakuumeinrichtung 10 auf.

Schließlich weist die Anlage noch im Anschuß an den Sublimator 4 und den Filter 8 eine Vakuumvorrichtung 11 auf, welche nur schematisch angedeutet ist.

Die Funktionsweise ist wie folgt:
Durch die Vakuumvorrichtung 11 werden über den Vakuumanschluß 2 die dem heißen, viskosen Kunststoff zu entziehenden Gase vor Austritt des Kunststoffs aus der Austrittsdüse des Spritzgießwerkzeugs abgesaugt. In der Vakuumleitung 3 herrscht dabei durch eine entsprechende Heizeinrichtung eine Temperatur von ca. 300° Celsius, um Sublimationen sowie Kondensationen in der Vakuumleitung 3 zu verhindern.

Die heißen Gase gelangen anschließend in den Sublimator 4, wo sie auf eine Temperatur unterhalb der Sublimationstemperatur, beispielsweise auf weniger als 10° Celsius heruntergekühlt werden. Auf der gekühlten, horizontalen Platte lagert sich das Sublimat ab.

Wenn sich eine entsprechende Menge an Sublimat auf der gekühlten Platte abgesetzt hat, muß die Platte von dem Sublimat gereinigt werden. Hierzu dient die Druckluftabreinigung 6 mit dem Druckluftanschluß 5. Dies bedeutet, daß das pulverförmige Sublimat mittels Druckluft von der Platte entfernt wird. Alternativ kann die Entfernung des Sublimats von der Platte auch mechanisch durch eine Art Schaber erfolgen. Über die Vakuumeinrichtung 7 erfolgt eine automatische Sublimatausschleusung unter Vakuum.

Die nicht sublimierten Anteile und/oder nichtsublimierbaren Anteile und/oder kondensierbaren Anteile werden danach in einer zweiten Stufe dem Filter 8 zugeführt und ausgefiltert. Die Reinigung dieses Filters 8 erfolgt auch hier von Zeit zu Zeit mittels der Druckluftabreinigung 9. Die Ausschleusung des ausgefilterten Materials erfolgt auch hier automatisch mittels der Vakuumeinrichtung 10.

Der Vorteil der erfindungsgemäßen Anlage besteht darin, daß die Vakuumvorrichtung 11 absolut sauberes und trockenes Gas ansaugt, wodurch eine betriebssichere Arbeitsweise im Dauerbetrieb gewährleistet ist. Denn irgendwelche Fremdstoffe können sich in der Vakuumeinrichtung 11 nicht ablagern, weil sie zuvor im Sublimator 4 oder im Filter 8 abgeschieden worden sind. Durch Betätigung der Druckluftabreinigungen 6, 9 von Zeit zu Zeit erfolgt eine entsprechende automatische Ausschleusung, so daß ein kontinuierlicher Extrusionsprozeß ohne Unterbruch für Reinigung des Sublimators 4 sowie des Filters 8 gewährleistet ist.

### Bezugszeichenliste

- 1: Extruder
- 2: Vakuumanschluß
- 3: Vakuumleitung
- 4: Sublimator
- 5: Druckluftanschluß
- 6: Druckluftabreinigung
- 7: Vakuumeinrichtung
- 8: Filter
- 9: Druckluftabreinigung
- 10: Vakuumeinrichtung
- 11: Vakuumvorrichtung

## Patentansprüche

1. Verfahren zum Extrudieren von Kunststoffteilen,
wobei vor dem Extrudieren der Kunststoffteile der noch viskose Kunststoff zum Entgasen einem Vakuum ausgesetzt wird und
wobei in dem viskosen Kunststoff sublimationsfähige Gase enthalten sind, **dadurch gekennzeichnet,**
**daß** die durch das Vakuum entzogenen, sublimationsfähigen Gase auf eine Temperatur unterhalb der Sublimationstemperatur gekühlt werden, so daß das Gas in Pulver resublimiert,
**daß** diese Resublimierung erfolgt, bevor die Gase die Einrichtung zur Erzeugung des Vakuums erreichen, und
**daß** weitere entzogene, nicht sublimationsfähige oder nicht sublimierte Anteile in einer nachfolgenden Stufe ausgefiltert werden.

2. Verfahren nach dem vorhergehenden Anspruch,
**dadurch gekennzeichnet,**
**daß** das Sublimat auf einer gekühlten Platte abgeschieden wird und
**daß** das abgeschiedene Sublimat von Zeit zu Zeit von der Platte entfernt und abgeführt wird.

3. Verfahren nach Anspruch 2,
**dadurch gekennzeichnet,**
**daß** das Sublimat mit Druckluft weggeblasen wird.

4. Verfahren nach Anspruch 2,
**dadurch gekennzeichnet,**
**daß** das Sublimat mechanisch von der Platte abgetragen wird.

5. Verfahren nach einem der vorhergehenden Ansprüche,
**dadurch gekennzeichnet,**
**daß** vor dem Kühlen des entzogenen Gases dieses auf eine Temperatur oberhalb der Sublimationstemperatur erwärmt wird.

6. Verfahren nach einem der vorhergehenden Ansprüche,
**dadurch gekennzeichnet,**
**daß** die ausgefilterten Anteile aus dem Filter von Zeit zu Zeit entfernt werden.

7. Verfahren nach einem der vorhergehenden Ansprüche,
**dadurch gekennzeichnet,**
**daß** die ausgefilterten Anteile mit Druckluft ausgeblasen werden.

## Claims

1. Method for extruding plastics material parts, wherein, before the extrusion of the plastics material parts, the still viscous plastics material is subjected to a vacuum for degassing and wherein gases capable of sublimation are contained in the viscous plastics material, **characterised in that** the gases capable of sublimation and extracted by the vacuum are cooled to a temperature below the sublimation temperature, so the gas resublimates into powder, **in that** this resublimation takes place before the gases reach the device for producing the vacuum, and **in that** further extracted fractions that are not capable of sublimation or have not sublimated are filtered out in a subsequent step.

2. Method according to any one of the preceding claims, **characterised in that** the sublimate is deposited on a cooled plate and **in that** the deposited sublimate is removed from the plate from time to time and discharged.

3. Method according to claim 2, **characterised in that** the sublimate is blown away with compressed air.

4. Method according to claim 2, **characterised in that** the sublimate is mechanically removed from the plate.

5. Method according to any one of the preceding claims, **characterised in that** before the cooling of the extracted gas, the latter is heated to a temperature above the sublimation temperature.

6. Method according to any one of the preceding claims, **characterised in that** the filtered-out fractions are removed from the filter from time to time.

7. Method according to any one of the preceding claims, **characterised in that** the filtered-out fractions are blown out with compressed air.

## Revendications

1. Procédé d'extrusion de pièces en matière plastique,
dans lequel, avant l'extrusion des pièces en matière plastique, la matière plastique encore visqueuse est exposée à un vide pour son dégazage et
dans lequel des gaz sublimables sont contenus dans la matière plastique visqueuse, **caractérisé en ce**
**que** les gaz sublimables extraits par le vide sont refroidis à une température inférieure à la température de sublimation, de sorte que le gaz se désublime en poudre,
**que** cette désublimation a lieu avant que les gaz n'atteignent le dispositif de génération du vide, et
**que** d'autres composantes extraites, non sublimables ou non sublimées sont filtrées dans une étape suivante.

2. Procédé selon la revendication précédente,
**caractérisé en ce**
**que** le sublimat est déposé sur un plateau refroidi et
**que** le sublimat déposé est de temps en temps éliminé du plateau et évacué.

3. Procédé selon la revendication 2,
**caractérisé en ce**
**que** le sublimat est éliminé par soufflage à l'air comprimé.

4. Procédé selon la revendication 2,
**caractérisé en ce**
**que** le sublimat est enlevé du plateau mécaniquement.

5. Procédé selon une des revendications précédentes,
**caractérisé en ce**
**qu'**avant le refroidissement du gaz extrait, celui-ci est chauffé à une température supérieure à la température de sublimation.

6. Procédé selon une des revendications précédentes,
**caractérisé en ce**
**que** les composantes filtrées sont de temps en temps éliminées du filtre.

7. Procédé selon une des revendications précédentes,
**caractérisé en ce**
**que** les composantes filtrées sont éliminées par soufflage à l'air comprimé.
